# EUROPEAN PATENT SPECIFICATION

(11) **EP 3 929 415 B1**
(45) Date of publication and mention of the grant of the patent: **16.11.2022**
(21) Application number: 21181638.4
(22) Date of filing: 25.06.2021
(51) Int. Cl.: F01N 3/28, B01F 23/213, F01N 13/18, F01N 3/20, B01F 25/314, B01F 25/421

(54) **EXHAUST GAS TREATMENT DEVICE FOR AN EXHAUST SYSTEM OF AN INTERNAL COMBUSTION ENGINE**
ABGASBEHANDLUNGSVORRICHTUNG FÜR EIN ABGASSYSTEM EINES VERBRENNUNGSMOTORS
DISPOSITIF DE TRAITEMENT DE GAZ D'ÉCHAPPEMENT POUR SYSTÈME D'ÉCHAPPEMENT D'UN MOTEUR À COMBUSTION INTERNE

(30) Priority: 25.06.2020 IT 202000015346
(43) Date of publication of application: 29.12.2021
(73) Proprietor: Marelli Europe S.p.A., 20011 Corbetta (MI) (IT)
(72) Inventor: SPATAFORA, Domenico, 10149 TORINO (IT); ETTORRE, Daniele, 20123 MILANO (IT)
(74) Representative: Maccagnan, Matteo

(56) References cited:
- WO-A1-2015/012829
- CN-A- 109 538 337
- CN-A- 110 273 734
- US-A1- 2020 032 692
- US-A1- 2020 131 974

## Description

### CROSS-REFERENCE TO RELATED APPLICATIONS

This Patent Application claims priority from Italian Patent Application No. 102020000015346 filed on June 25, 2020.

### TECHNICAL FIELD

The present invention relates to an exhaust gas treatment device for an exhaust system of an internal combustion engine.

### PRIOR ART

The international regulations relating to the control of emissions of polluting gases produced by automobiles provide for a very low limit for NOₓ molecules that can be released into the atmosphere.

The compliance with such limits is particularly critical especially for Diesel motors; for this reason, it has been suggested to equip the exhaust system of a Diesel engine with a further SCR (Selective Catalytic Reduction) catalytic converter for NOₓ designed to convert the NOₓ molecules (NO₂ or NO) into nitrogen (N₂) which is an inert gas and water (H₂0). The reduction reaction of the NOₓ molecules into nitrogen (N₂) is difficult to achieve without the use of a suitable reducing agent which has generally been identified in ammonia (NH₃). The reducing agent has to be injected into the exhaust system and upstream of the SCR catalytic converter so as to mix with the exhaust gases before entering the SCR catalytic converter.

However, storing ammonia inside an automobile is unadvisable for obvious safety reasons linked to the fact that ammonia is toxic. As a consequence, it has been proposed to store and inject an aqueous urea solution, as urea decomposes into ammonia by effect of the heat of the exhaust gases and in part also by catalytic effect.

In order to maximize the efficiency of the SCR catalytic converter, it is necessary for the ammonia concentration on the surface of the monolith of the SCR catalytic converter to be as homogeneous as possible. Moreover, a problem linked to the injection of an aqueous urea solution into the exhaust system is linked to the fact that on the inner walls of the exhaust system solid incrustations difficult to remove can form of both urea and isocyanic acid (HNCO), which is a possible derivative of the decomposition of the urea.

In order to maximize the homogeneity of the ammonia concentration on the surface of the monolith of the SCR catalytic converter (and also to prevent the formation of solid incrustations on the inner walls of the exhaust system), it has been proposed to insert a mixer in the exhaust system and in the proximity of the injection area of the urea, said mixer by forming turbulence in the exhaust gases favours the homogeneous dispersion of the ammonia in the exhaust gases. Patent application No. WO2018001789A1 describes an exhaust gas treatment device provided with a reducing additive injector at a static mixer (i.e. not containing any moving parts).

However, the known mixers of the type described in the foregoing have the drawback of not having an optimal balance between the opposite requirements of effectiveness (i.e. of ensuring a suitable mixing of the exhaust gases) and efficiency (i.e. of limiting the pressure drops in the exhaust gases). In other words, the known mixers of the type described in the foregoing either have a low effectiveness (i.e. do not ensure a suitable mixing of the exhaust gases) or have a low efficiency (i.e. cause significant pressure drops in the exhaust gases).

Patent application No. CN109538337A describes an exhaust gas treatment device for an exhaust system of an internal combustion engine; in particular, a mixing device that brings about the mixing of the exhaust gases and the urea injected by a designated injector is provided.

### DESCRIPTION OF THE INVENTION

The object of the present invention is to provide an exhaust gas treatment device for an exhaust system of an internal combustion engine, which treatment device is devoid of the drawbacks described in the foregoing and, in particular, is easy and cost-effective to manufacture.

According to the present invention, an exhaust gas treatment device for an exhaust system of an internal combustion engine is provided, as claimed in the appended claims.

The claims describe preferred embodiments of the present invention and constitute an integral part of the present description.

### BRIEF DESCRIPTION OF THE DRAWINGS

The present invention will now be described with reference to the accompanying drawings, which illustrate a non-limiting example embodiment thereof, wherein:
- Figure 1 is a perspective view of an exhaust gas treatment device manufactured according to the present invention;
- Figure 2 is a further perspective view of the treatment device of Figure 1;
- Figures 3 and 4 are two different perspective views of a mixing body of the treatment device of Figure 1;
- Figures 5 and 6 are two different perspective views of the mixing body of Figures 3 and 4 with the elimination of a base wall; and
- Figure 7 is a longitudinal sectional view of the treatment device of Figure 1.

### PREFERRED EMBODIMENTS OF THE INVENTION

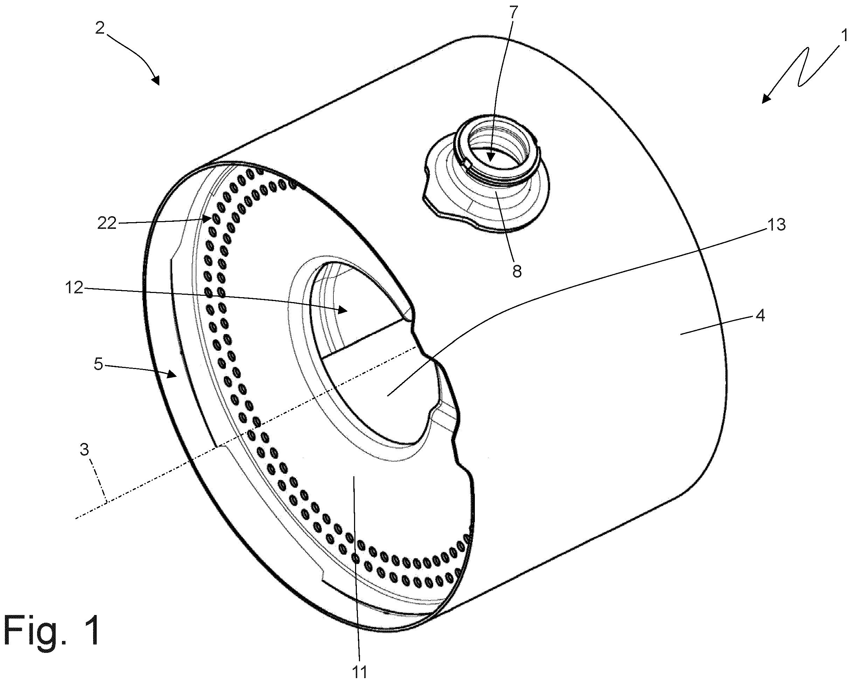

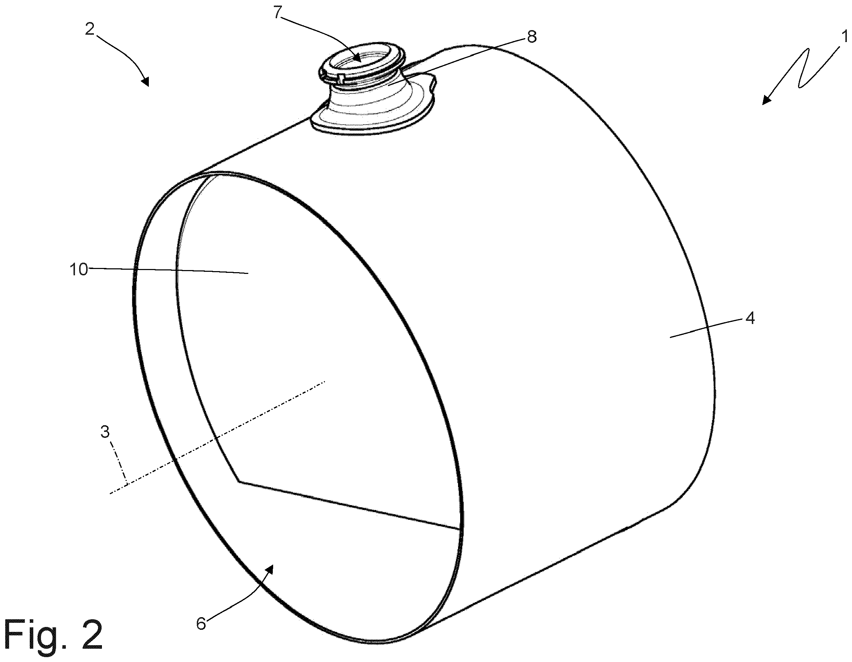

In Figures 1 and 2, reference numeral 1 indicates, as a whole, an exhaust gas treatment device for an exhaust system of an internal combustion engine preferably operating according to a Diesel cycle (i.e. powered by diesel or the like) .

The exhaust gas treatment device 1 comprises a tubular duct 2 which has a longitudinal axis 3 and has a cylindrical shape (i.e. a circular cross section of a constant diameter). The tubular duct 2 is delimited by a tubular side wall 4 made of sheet metal and has an exhaust gas inlet opening 5 (illustrated in Figure 1) arranged at a first base of the tubular duct 2 and an exhaust gas outlet opening 6 (illustrated in Figure 2) which is opposite the inlet opening 5 and is arranged at a second base of the tubular duct 2 (obviously opposite the first base of the tubular duct 2); consequently, in use, the exhaust gases enter the tubular duct 2 through the inlet opening 5, traverse the tubular duct 2, and then exit the tubular duct 2 through the outlet opening 6.

The tubular duct 2 further has an injection opening 7, which is obtained through the tubular side wall 4 between the inlet opening 5 and the outlet opening 6 and is designed to receive and house an injector for a reducing substance; in particular, a tubular housing 8 which protrudes cantilever from the tubular side wall 4 and is configured to receive and house the injector is arranged around the injection opening 7.

The injector is designed to inject a reducing additive and in particular an aqueous urea solution (i.e. a solution of urea and water) into the tubular duct 2; in use, by effect of the heat of the exhaust gases present inside the tubular duct 2, the urea decomposes spontaneously into isocyanic acid (HNCO) and ammonia (NH₃), the ammonia acting as a reducing substance inside a subsequent SCR catalytic converter in order to facilitate the decomposition reaction of the NOₓ molecules into nitrogen (N₂) and water (H₂O).

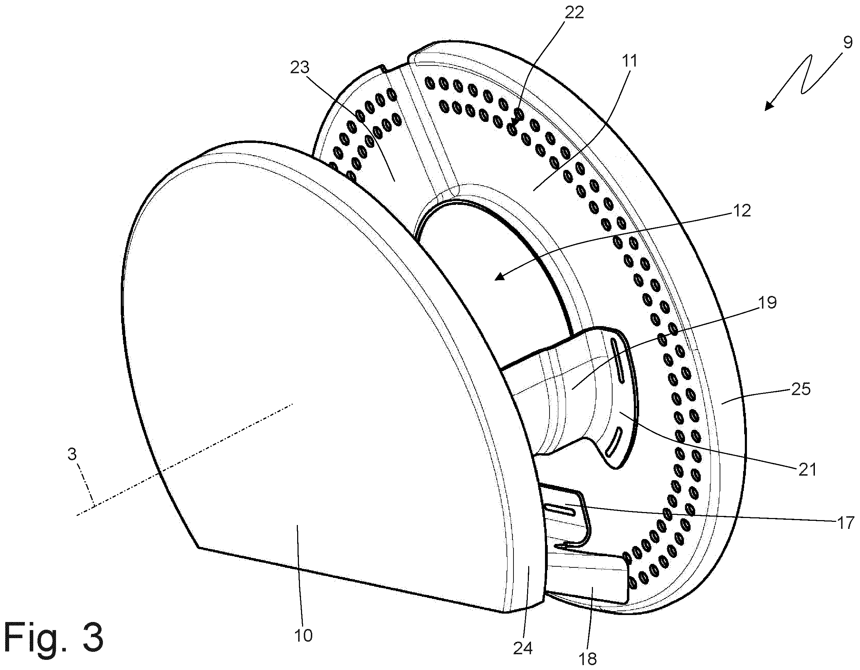

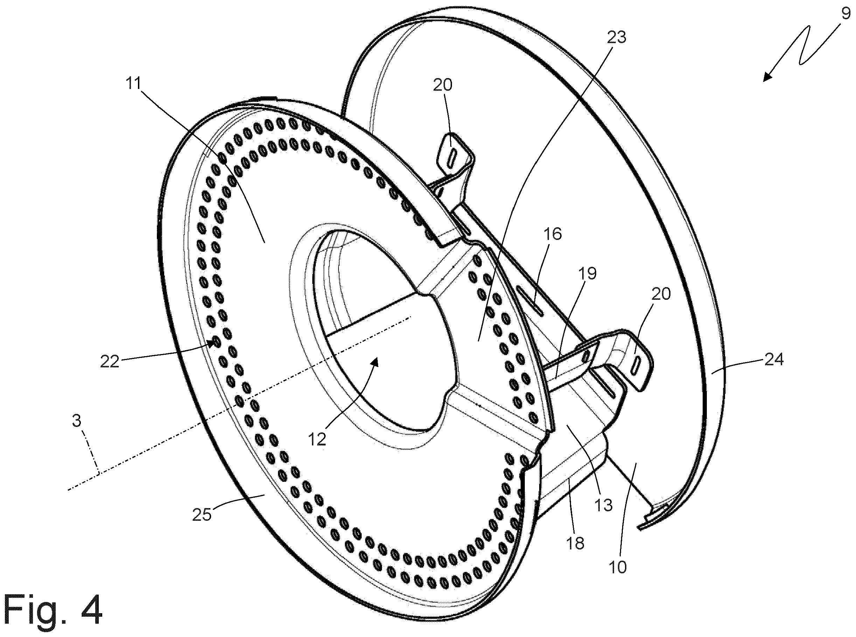

As better illustrated in Figures 3 and 4, the treatment device 1 comprises a mixing body 9 (static, i.e. not containing any moving parts), which is arranged inside the tubular duct 2 and creates a forced path to be followed by the exhaust gases in order to flow from the inlet opening 5 to the outlet opening 6. In particular, the mixing body 9 has the function of generating turbulence in the exhaust gases present inside the tubular duct 2 so as to increase the efficiency of the subsequent SCR catalytic converter rendering the dispersion of the ammonia in the exhaust gases more homogeneous.

The mixing body 9 comprises a base wall 10, which is coaxial to the tubular duct 2 (i.e. to the longitudinal axis 3 of the tubular duct 2), has a partially circular shape, faces the outlet opening 6 of the tubular duct 2, and partially engages the cross section of the tubular duct 2 leaving free only one single passage area that is shaped like a half-moon and does not contain any obstacles. In other words, the base wall 10 is obtained by starting with a circular disc having the same size as the cross section of the tubular duct 2 (so as to completely obstruct said tubular duct 2) and eliminating a segment in the shape of a half-moon so as to create the passage area (obviously shaped like a half-moon). The base wall 10 of a partially circular shape and devoid of any holes only partially engages (plugs) the cross section of the tubular duct 2 and thus the exhaust gases can continue beyond the base wall 10 passing next to said base wall 10.

The mixing body 9 comprises a base wall 11, which is coaxial to the tubular duct 2 (i.e. to the longitudinal axis 3 of the tubular duct 2), has a (completely) circular shape, is parallel to and opposite the base wall 10, faces the inlet opening 5 of the tubular duct 2, completely engages the cross section of the tubular duct 2 and has, at the centre, a main hole 12, which is coaxial to the tubular duct 2 (i.e. is coaxial to the longitudinal axis 3) and is a through hole in order to allow for the passage of the exhaust gases. The base wall 11 completely engages (plugs) the cross section of the tubular duct 2 (i.e. the exhaust gases can only continue beyond the base wall 11 through the main hole 12 of said base wall 11). In particular, the base wall 11 has, at the centre, a single and one and only main hole 12, which is the only pathway that the exhaust gases have to continue beyond the base wall 11.

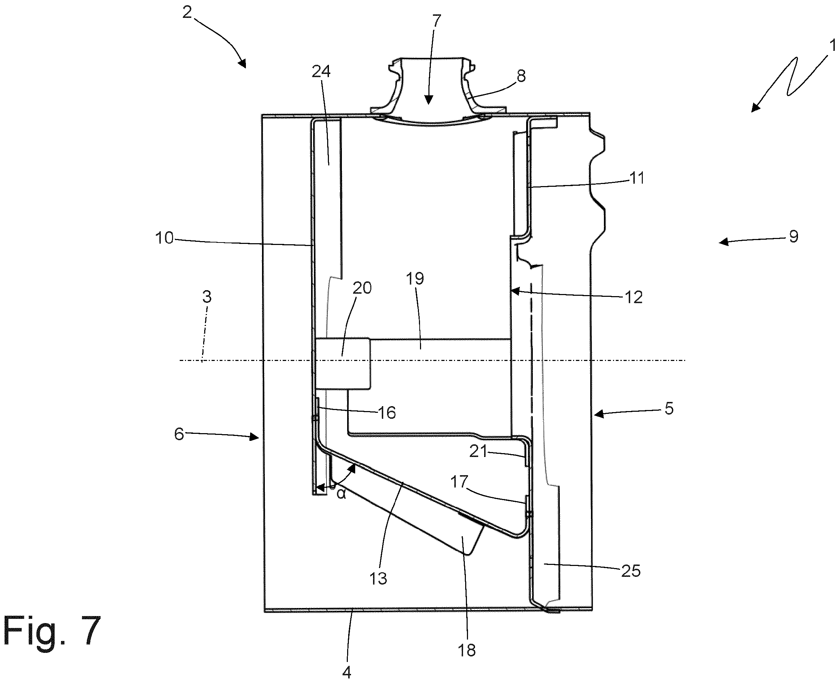

As illustrated in Figures 3-7, the mixing body 9 comprises a deflector wall 13 with a flat shape, which extends from the base wall 10 towards the base wall 11, forms an acute angle α (illustrated in Figure 7) with the base wall 10 as well as with the base wall 11, and is configured to force the exhaust gases that reach the outlet opening 6 (i.e. that pass through the passage area of the base wall 10) to also assume a transverse and/or circumferential motion component necessary to pass over said deflector wall 13. The deflector wall 13 is inclined and thus creates, together with the side wall 4 of the tubular duct 2, a passage channel having an area useful for the flow of exhaust gases, which gradually increases as it approaches the outlet opening 6, i.e. as it approaches the passage area of the base wall 10). Obviously, the deflector wall 13 forms the acute angle α with the base wall 10 on one side, while the deflector wall 13 forms an obtuse angle (supplementary relative to the acute angle α) with the base wall 10 on the other side.

According to a preferred embodiment, the deflector wall 13 has a cross extension, namely perpendicular to the longitudinal axis 3 of the tubular duct 2, which is smaller than the corresponding cross extension of the tubular duct 2, i.e. the deflector wall 13 is narrower than the tubular duct 2 and leaves free (i.e. not engaged by the deflector wall 13) two areas of the tubular duct 2 arranged between the side edges of the deflector wall 13 and the side wall 4.

The deflector wall 13 has a central band 14, which extends up to the base wall 11, and two side bands 15, which are arranged on opposite sides of the central band 14 and end before the base wall 11, i.e. are arranged at a distance other than zero from the base wall 11. Preferably, each side band 15 ends with an outer edge which faces the base wall 11 and has a semi-circular shape in plan (as is better illustrated in Figure 7).

The deflector wall 13 has, at one end, a flange 16, which is arranged transversely to the rest of the deflector wall 13 and rests against the base wall 10 in order to connect (fix) the deflector wall 13 to the base wall 10. Analogously, the deflector wall 13 has, at an opposite end, another flange 17, which is arranged transversely to the rest of the deflector wall 13 and rests against the base wall 11 in order to connect (fix) the deflector wall 13 to the base wall 11; obviously, the flange 16 extends over the entire deflector wall 13, while the flange 17 extends only in the area of the central band 14 of the deflector wall 13.

According to a preferred, but non-limiting embodiment illustrated in the accompanying figures, the deflector wall 13 has a flat shape and is provided, at the two opposite edges, with wings 18 arranged transversely and oriented towards the closest side wall 4 (i.e. on the side opposite the injection opening 7).

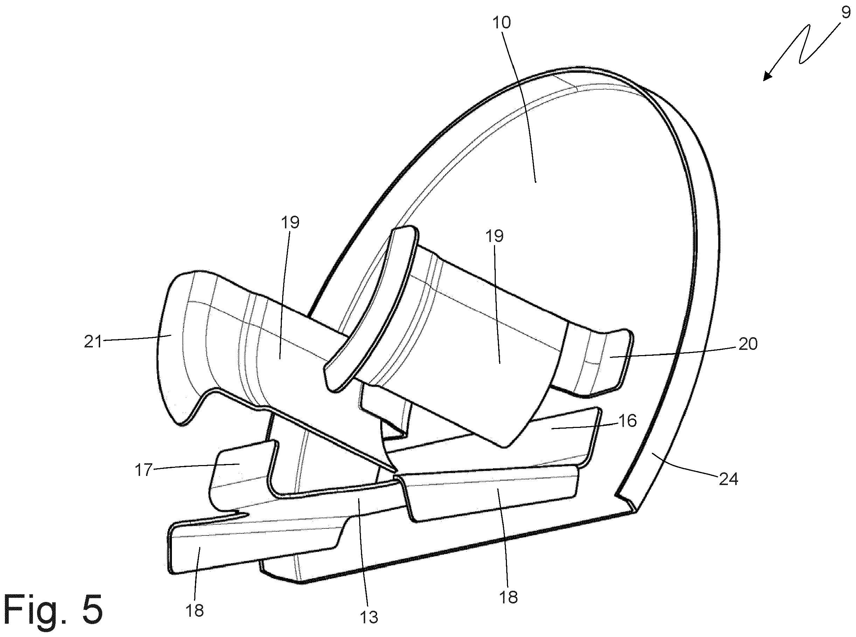

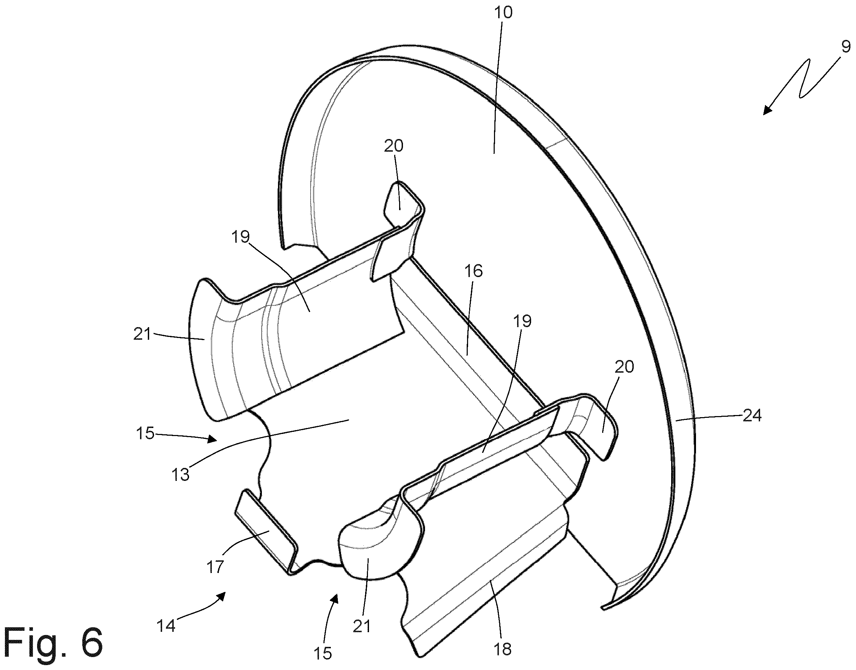

As better illustrated in Figures 5 and 6, the mixing body 9 comprises two deflector walls 19, which are symmetrically arranged around the longitudinal axis 3 of the tubular duct 2 and at a distance other than zero from one another (i.e. the two deflector walls 19 do not touch each other and face each other); i.e. the two deflector walls 19 have a mirrored symmetry relative to the longitudinal axis 3 of the tubular duct 2.

Each deflector wall 19 connects the base wall 10 to the base wall 11, is oriented crosswise relative to the deflector wall 13, is arranged beside the deflector wall 13 at a distance other than zero from said deflector wall 13, and is connected to the base wall 11 next to the main hole 12 (i.e. in the proximity of the edge of the main hole 12).

Each deflector wall 19 has a cylindrical shape coaxial to the tubular duct 2; indicatively, each deflector wall 19 has an angular extension of approximately 15°-25°.

According to a preferred, but non-limiting embodiment illustrated in the accompanying figures, each deflector wall 19 ends in the area of a middle plane of the tubular duct 2 (i.e. of a plane that divides the tubular duct 2 into two symmetrical halves and passes through the longitudinal axis 3 of the tubular duct 2); i.e. overall the deflector walls 13 and 19 engage half of the inner volume of the tubular duct 2.

Each deflector wall 19 has, at one end, a flange 20, which is arranged perpendicularly to the rest of the deflector wall 19 and rests against the base wall 10 in order to connect (fix) the deflector wall 19 to the base wall 10. Analogously, each deflector wall 19 has, at an opposite end, another flange 21, which is arranged perpendicularly to the rest of the deflector wall 19 and rests against the base wall 11 in order to connect (fix) the deflector wall 19 to the base wall 11. According to the embodiment illustrated in the accompanying figure, the flange 20 of each deflector wall 19 is narrower than the rest of the deflector wall 19.

The injection opening 7 is arranged on an opposite side relative to the deflector wall 13 so as to be located in the farthest point relative to the deflector wall 13 and at the centre relative to the two deflector walls 19; in this manner, the jet of reducing agent sprayed by the injector is directed against the deflector wall 13 passing through the two deflector walls 19.

According to a preferred embodiment illustrated in Figures 3 and 4, the base wall 11 has a plurality of secondary holes 22, which are through holes so as to allow for the passage of the exhaust gases (as an alternative to the main hole 12), have a (considerably) smaller diameter than the main hole 12, and are arranged around the main hole 12. In particular, the secondary holes 22 are distributed along two circumferences, which are arranged one inside the other, are coaxial to the main hole 12, and surround said main hole 12; moreover, the secondary holes 22 are arranged in the proximity of the tubular side wall 4 so as to be (much) closer to the tubular side wall 4 and (much) farther from the main hole 12.

The base wall 11 has a large plurality of small secondary through holes 22 placed side by side; in particular, several dozens of secondary through holes 22 are provided (approximately 180-240 secondary through holes 22). Each secondary through hole 22 has a diameter comprised between 1-3 mm, thus the diameter of each secondary through hole 22 is equal to a small fraction of a diameter of the main hole 12 and of a diameter of the tubular duct 2; for example, the diameter of each secondary hole 22 is equal to 0.5-3% of the diameter of the main hole 12.

It is important to note that the secondary through holes 22 allow only a modest fraction of the exhaust gases arriving from the inlet opening 5 of the tubular duct 2 to pass through the base wall 11 of the mixing body 9, while the predominant part of the exhaust gases arriving from the inlet opening 5 of the tubular duct 2 is forced to pass through the main hole 12 (which, being much larger than the secondary holes 22, causes much lower pressure drops when passing). In other words, the secondary holes 22 constitute an alternative to the main hole 12 for the passage of the exhaust gases through the base wall 11 of the mixing body 9; therefore, a minor part of the exhaust gases, instead of passing the base wall 11 through the main hole 12, passes the base wall 11 through the secondary holes 22 which constitute a bypass of the main hole 12.

According to a different embodiment not illustrated, the base wall 11 of the mixing body 9 is devoid of any secondary through holes 22.

According to a preferred, but non-limiting embodiment illustrated in Figure 4, the base wall 11 has a depressed sector 23, which is axially offset towards the base wall 10 relative to the rest of the base wall 11; i.e. the depressed sector 23 is not co-planar with the rest of the base wall 11 and is axially closer to the base wall 10 than the rest of the base wall 11. The depressed circular sector 23 has, indicatively, an angular extension of 15°-30°.

According to a preferred, but non-limiting embodiment illustrated in the accompanying figures, the base wall 10 of the mixing body 9 has an annular edge 24, which is perpendicular to the base wall 10, develops around the longitudinal axis 3, and rests against and is fixed (welded) to an inner surface of the tubular side wall 4 of the tubular duct 2.

Analogously, also the base wall 11 of the mixing body 9 has an edge 25, which is perpendicular to the base wall 11, develops less than 360° (since it interrupts at the depressed sector 23) around the longitudinal axis 3 and rests against and is fixed (welded) to an inner surface of the tubular side wall 4.

The exhaust gases pass through the base wall 11 of the mixing body 9 via the main hole 12 and the secondary holes 22 and with a completely axial motion (i.e. without any transverse/circumferential components); subsequently, the presence of the base wall 10 of the mixing body 9 and of the deflector wall 13 imposes on the exhaust gases to split into two flows which pass the deflector wall 13 (as well as the deflector walls 19) laterally with a circular motion in order to be able to arrive at the passage area located next to the base wall 10 (and which represents the only possibility to pass the base wall 10 and thus to reach the outlet opening 6). The change in orientation of the motion imposed by the presence of the base wall 10 and the deflector wall 13 (and in part also by the presence of the deflector walls 19) also gives the exhaust gases a (significant) circumferential motion component in addition to the predominant axial motion component favouring the mixing of the reducing agent that is sprayed by the injector arranged through the injection opening 7; i.e. the turbulent motion (due to the radial and tangential motion components induced by the particular shape of the mixing body 9) favours an optimal mixing with the exhaust gases of the reducing additive injected through the injection opening 7.

According to a different embodiment not illustrated, the tubular duct 2 could also house an oxidizing catalytic converter arranged upstream of the mixing body 9 (i.e. which the exhaust gases pass through first) and/or an SCR (selective catalytic reduction) catalytic converter for the aftertreatment of the NOₓ molecules (NO and NO₂) and arranged downstream of the mixing body 9 (i.e. which the exhaust gases pass through last); the SCR catalytic converter could also integrate a particulate filter.

The embodiments described herein can be combined with one another without departing from the scope of protection of the present invention.

The treatment device 1 described in the foregoing has numerous advantages.

Firstly, the treatment device 1 described in the foregoing has an optimal balance between the conflicting requirements of effectiveness (i.e. ensuring a suitable mixing of the exhaust gases) and of efficiency (i.e. causing limited pressure drops in the exhaust gases) . In other words, the treatment device 1 described in the foregoing simultaneously has a high effectiveness (i.e. ensures an adequate mixing of the exhaust gases) and a high efficiency (i.e. causes moderate pressure drops in the exhaust gases).

In addition, the treatment device 1 described in the foregoing is particularly robust (thus has a long service life and a very low risk of breakage) as it is composed of few parts.

The treatment device 1 described in the foregoing has a particularly reduced (especially axial) bulk and a modest overall weight.

Finally, the treatment device 1 described in the foregoing is easy and inexpensive to manufacture, as it is composed of few parts which have non-complex shapes and which are easy to join by means of standard ring welds.

### LIST OF REFERENCE NUMERALS OF THE FIGURES

- 1: treatment device
- 2: tubular duct
- 3: longitudinal axis
- 4: tubular side wall
- 5: inlet opening
- 6: outlet opening
- 7: injection opening
- 8: tubular housing
- 9: mixing body
- 10: base wall
- 11: base wall
- 12: main hole
- 13: deflector wall
- 14: central band
- 15: side bands
- 16: flange
- 17: flange
- 18: wings
- 19: deflector wall
- 20: flange
- 21: flange
- 22: secondary holes
- 23: depressed sector
- 24: annular edge
- 25: annular edge

## Claims

1. An exhaust gas treatment device (1) for an exhaust system of an internal combustion engine; the treatment device (1) comprises:
a tubular duct (2), which is delimited by a tubular side wall (4) and has an exhaust gas inlet opening (5), an exhaust gas outlet opening (6) opposite the inlet opening (5), and an injection opening (7), which is obtained through the tubular side wall (4) between the inlet opening (5) and the outlet opening (6) and is designed to receive an injector for a reducing substance; and
a mixing body (9), which is arranged inside the tubular duct (2) and creates a forced path to be followed by the exhaust gases in order to flow from the inlet opening (5) to the outlet opening (6);
wherein the mixing body (9) comprises a first base wall (10) with a partially circular shape, which faces the outlet opening (6) of the tubular duct (2) and partially engages the cross section of the tubular duct (2) leaving free a passage area;
wherein the mixing body (9) comprises a second base wall (11) with a circular shape, which faces the inlet opening (5) of the tubular duct (2), completely engages the cross section of the tubular duct (2) and has, at the centre, a main hole (12), which is coaxial to the tubular duct (2) and is a through hole in order to allow for the passage of the exhaust gases; and
wherein the mixing body (9) comprises a first deflector wall (13), which extends from the first base wall (10) towards the second base wall (11);
the treatment device (1) is **characterized in that:**
the first deflector wall (13) forms an acute angle with the first base wall (10) and with the second base wall (11);
the first base wall (10) partially engages the cross section of the tubular duct (2) so as to leave free only one single passage area shaped like a half-moon and not containing any obstructions; and
the second base wall (11) has, at the centre, a single and one and only main hole (12).

2. The treatment device (1) according to claim 1, wherein the first deflector wall (13) has a central band (14), which extends up to the second base wall (11), and two side bands (15), which are arranged on opposite sides of the central band (14) and end before the second base wall (11).

3. The treatment device (1) according to claim 1 or 2, wherein the first deflector wall (13) has a cross extension, namely perpendicular to a longitudinal axis (3) of the tubular duct (2), which is smaller than the corresponding cross extension of the tubular duct (2).

4. The treatment device (1) according to claim 1, 2 or 3, wherein the first deflector wall (13) has a flat shape and is provided, on the two opposite edges, with wings (18) arranged perpendicularly.

5. The treatment device (1) according to one of the claims from 1 to 4, wherein the mixing body (9) comprises at least one second deflector wall (19), which connects the first base wall (10) to the second base wall (11), is oriented crosswise relative to the first deflector wall (13), is arranged beside the first deflector wall (13) at a distance other than zero from the first deflector wall (13), and is connected to the second base wall (11) next to the main hole (12).

6. The treatment device (1) according to claim 5, wherein the second deflector wall (19) has a cylindrical shape coaxial to the tubular duct (2).

7. The treatment device (1) according to claim 5 or 6, wherein the second deflector wall (19) ends in the area of a middle plane of the tubular duct (2).

8. The treatment device (1) according to claim 5, 6 or 7, wherein the mixing body (9) comprises two second deflector walls (19), which are symmetrically arranged around a longitudinal axis (3) of the tubular duct (2) and at a distance other than zero from one another.

9. The treatment device (1) according to claim 8, wherein the injection opening (7) is arranged on an opposite side relative to the first deflector wall (13) so as to be in the farthest point relative to the first deflector wall (13) and at the centre relative to the two second deflector walls (19).

10. The treatment device (1) according to one of the claims from 1 to 9, wherein the second base wall (11) has a plurality of secondary holes (22), which are through holes so as to allow for the passage of the exhaust gases, have a smaller diameter than the main hole (12) and are arranged around the main hole (12).

11. The treatment device (1) according to claim 10, wherein the secondary holes (22) are distributed along a circumference, which is coaxial to the main hole (12), and surround the main hole (12).

12. The treatment device (1) according to claim 10 or 11, wherein the secondary holes (22) are distributed along two circumferences, which are arranged inside one another, are coaxial to the main hole (12) and surround the main hole (12) .

13. The treatment device (1) according to claim 10, 11 or 12, wherein the secondary holes (22) are arranged in the proximity of the tubular side wall (4) so as to be closer to the tubular side wall (4) and farther from the main hole (12) .

14. The treatment device (1) according to one of the claims from 1 to 13, wherein the injection opening (7) is arranged on an opposite side relative to the first deflector wall (13) so as to be in the farthest point relative to the first deflector wall (13).

15. The treatment device (1) according to one of the claims from 1 to 14, wherein the second base wall (11) has a depressed sector (23), which is axially offset towards the first base wall (10) relative to the rest of the second base wall (11).

## Patentansprüche

1. Abgasbehandlungsvorrichtung (1) für ein Abgassystem eines Verbrennungsmotors; wobei die Behandlungsvorrichtung (1) umfasst:
einen rohrförmigen Kanal (2), der durch eine rohrförmige Seitenwand (4) begrenzt ist und eine Abgaseinlassöffnung (5), eine der Einlassöffnung (5) gegenüberliegende Abgasauslassöffnung (6) und eine Einspritzöffnung (7) aufweist, die durch die rohrförmige Seitenwand (4) zwischen der Einlassöffnung (5) und der Auslassöffnung (6) erhalten wird und zum Aufnehmen eines Injektors für eine reduzierende Substanz ausgebildet ist; und
einen Mischkörper (9), der innerhalb des röhrenförmigen Kanals (2) angeordnet ist und einen Zwangsweg erzeugt, dem die Abgase folgen müssen, um von der Einlassöffnung (5) zu der Auslassöffnung (6) zu strömen;
wobei der Mischkörper (9) eine erste Basiswand (10) mit einer teilweise kreisförmigen Form umfasst, die der Auslassöffnung (6) des rohrförmigen Kanals (2) zugewandt ist und teilweise in den Querschnitt des rohrförmigen Kanals (2) eingreift, wobei ein Durchgangsbereich frei bleibt;
wobei der Mischkörper (9) eine zweite Basiswand (11) mit einer kreisförmigen Form umfasst, die der Einlassöffnung (5) des röhrenförmigen Kanals (2) zugewandt ist, vollständig in den Querschnitt des röhrenförmigen Kanals (2) eingreift und in der Mitte ein Hauptloch (12) aufweist, das koaxial zu dem röhrenförmigen Kanal (2) ist und ein Durchgangsloch ist, um den Durchgang der Abgase zu ermöglichen; und
wobei der Mischkörper (9) eine erste Ablenkwand (13) umfasst, die sich von der ersten Basiswand (10) in Richtung zu der zweiten Basiswand (11) erstreckt;
wobei die Behandlungsvorrichtung (1) **dadurch gekennzeichnet ist, dass**:
die erste Ablenkwand (13) einen spitzen Winkel mit der ersten Basiswand (10) und mit der zweiten Basiswand (11) bildet;
die erste Basiswand (10) teilweise in den Querschnitt des rohrförmigen Kanals (2) eingreift, so dass nur ein einziger halbmondförmiger Durchgangsbereich frei bleibt, der keine Hindernisse enthält; und
die zweite Basiswand (11) in der Mitte ein einziges Hauptloch (12) aufweist.

2. Behandlungsvorrichtung (1) nach Anspruch 1, wobei die erste Ablenkwand (13) ein zentrales Band (14) aufweist, das sich bis zu der zweiten Basiswand (11) erstreckt, und zwei Seitenbänder (15), die auf gegenüberliegenden Seiten des zentralen Bandes (14) angeordnet sind und vor der zweiten Basiswand (11) enden.

3. Behandlungsvorrichtung (1) nach Anspruch 1 oder 2, wobei die erste Ablenkwand (13) eine Querausdehnung, das heißt senkrecht zu einer Längsachse (3) des rohrförmigen Kanals (2), aufweist, die kleiner ist als die entsprechende Querausdehnung des rohrförmigen Kanals (2).

4. Behandlungsvorrichtung (1) nach Anspruch 1, 2 oder 3, wobei die erste Ablenkwand (13) eine flache Form aufweist und an den beiden gegenüberliegenden Rändern mit senkrecht angeordneten Flügeln (18) versehen ist.

5. Behandlungsvorrichtung (1) nach einem der Ansprüche 1 bis 4, wobei der Mischkörper (9) wenigstens eine zweite Ablenkwand (19) umfasst, die die erste Basiswand (10) mit der zweiten Basiswand (11) verbindet, relativ zu der ersten Ablenkwand (13) quer ausgerichtet ist, neben der ersten Ablenkwand (13) in einem von Null verschiedenen Abstand zur ersten Ablenkwand (13) angeordnet ist und neben dem Hauptloch (12) mit der zweiten Basiswand (11) verbunden ist.

6. Behandlungsvorrichtung (1) nach Anspruch 5, wobei die zweite Ablenkwand (19) eine zylindrische Form aufweist, die koaxial zu dem rohrförmigen Kanal (2) ist.

7. Behandlungsvorrichtung (1) nach Anspruch 5 oder 6, wobei die zweite Ablenkwand (19) im Bereich einer Mittelebene des rohrförmigen Kanals (2) endet.

8. Behandlungsvorrichtung (1) nach Anspruch 5, 6 oder 7, wobei der Mischkörper (9) zwei zweite Ablenkwände (19) umfasst, die symmetrisch um eine Längsachse (3) des rohrförmigen Kanals (2) und in einem von Null verschiedenen Abstand voneinander angeordnet sind.

9. Behandlungsvorrichtung (1) nach Anspruch 8, wobei die Einspritzöffnung (7) auf einer der ersten Ablenkwand (13) gegenüberliegenden Seite angeordnet ist, so dass sie sich an der am weitesten entfernten Stelle in Bezug auf die erste Ablenkwand (13) und in der Mitte in Bezug auf die beiden zweiten Ablenkwände (19) befindet.

10. Behandlungsvorrichtung (1) nach einem der Ansprüche 1 bis 9, wobei die zweite Basiswand (11) mehrere Nebenlöcher (22) aufweist, die Durchgangslöcher sind und somit den Durchtritt der Abgase ermöglichen, einen kleineren Durchmesser als das Hauptloch (12) aufweisen und um das Hauptloch (12) herum angeordnet sind.

11. Behandlungsvorrichtung (1) nach Anspruch 10, wobei die Nebenlöcher (22) entlang einer Kreislinie verteilt sind, die koaxial zum Hauptloch (12) ist, und das Hauptloch (12) umgeben.

12. Behandlungsvorrichtung (1) nach Anspruch 10 oder 11, wobei die Nebenlöcher (22) entlang zweier ineinander angeordneter Kreislinien verteilt sind, die koaxial zum Hauptloch (12) sind, und das Hauptloch (12) umgeben.

13. Behandlungsvorrichtung (1) nach Anspruch 10, 11 oder 12, wobei die Nebenlöcher (22) in der Nähe der rohrförmigen Seitenwand (4) angeordnet sind, so dass sie näher an der rohrförmigen Seitenwand (4) und weiter entfernt von dem Hauptloch (12) sind.

14. Behandlungsvorrichtung (1) nach einem der Ansprüche 1 bis 13, wobei die Einspritzöffnung (7) auf einer der ersten Ablenkwand (13) gegenüberliegenden Seite angeordnet ist, so dass sie sich an der am weitesten entfernten Stelle in Bezug auf die erste Ablenkwand (13) befindet.

15. Behandlungsvorrichtung (1) nach einem der Ansprüche 1 bis 14, wobei die zweite Basiswand (11) einen vertieften Sektor (23) aufweist, der in Bezug zum Rest der zweiten Basiswand (11) zur ersten Basiswand (10) hin axial versetzt ist.

## Revendications

1. Dispositif de traitement de gaz d'échappement (1) pour un système d'échappement d'un moteur à combustion interne ; le dispositif de traitement (1) comprend :
une conduite tubulaire (2), qui est délimitée par une paroi de côté tubulaire (4) et comporte une ouverture d'entrée (5) de gaz d'échappement, une ouverture de sortie (6) de gaz d'échappement opposée à l'ouverture d'entrée (5), et une ouverture d'injection (7), qui est obtenue à travers la paroi de côté tubulaire (4) entre l'ouverture d'entrée (5) et l'ouverture de sortie (6) et est conçue pour recevoir un injecteur pour une substance réductrice ; et
un corps mélangeur (9), qui est agencé à l'intérieur de la conduite tubulaire (2) et crée un chemin forcé à suivre par les gaz d'échappement afin qu'ils s'écoulent de l'ouverture d'entrée (5) à l'ouverture de sortie (6) ;
dans lequel le corps mélangeur (9) comprend une première paroi de base (10) de forme partiellement circulaire, qui est face à l'ouverture de sortie (6) de la conduite tubulaire (2) et s'engage partiellement avec la section transversale de la conduite tubulaire (2) laissant libre une zone de passage (20) ;
dans lequel le corps mélangeur (9) comprend une seconde paroi de base (11) de forme circulaire, qui est face à l'ouverture d'entrée (5) de la conduite tubulaire (2), s'engage totalement avec la section transversale de la conduite tubulaire (2) et comporte, au centre, un trou principal (12) qui est coaxial à la conduite tubulaire (2) et est un trou traversant afin de permettre le passage des gaz d'échappement ; et
dans lequel le corps mélangeur (9) comprend une première paroi déflectrice (13), qui s'étend de la première paroi de base (10) vers la seconde paroi de base (11) ;
le dispositif de traitement (1) est **caractérisé en ce que** :
la première paroi déflectrice (13) forme un angle aigu avec la première paroi de base (10) et avec la seconde paroi de base (11) ;
la première paroi de base (10) s'engage partiellement avec la section transversale de la conduite tubulaire (2) de façon à laisser libre uniquement une seule zone de passage en forme de demilune et ne contenant pas d'obstruction ; et
la seconde paroi de base (11) comporte, au centre, un seul et unique trou principal (12).

2. Dispositif de traitement (1) selon la revendication 1, dans lequel la première paroi déflectrice (13) comporte une bande centrale (14), qui s'étend jusqu'à la seconde paroi de base (11), et deux bandes de côté (15), qui sont agencées sur des côtés opposés de la bande centrale (14) et se terminent avant la seconde paroi de base (11).

3. Dispositif de traitement (1) selon la revendication 1 ou 2, dans lequel la première paroi déflectrice (13) présente une extension transversale, c'est-à-dire perpendiculaire à un axe longitudinal (3) de la conduite tubulaire (2), qui est plus petite que l'extension transversale correspondante de la conduite tubulaire (2).

4. Dispositif de traitement (1) selon la revendication 1, 2 ou 3, dans lequel la première paroi déflectrice (13) présente une forme plate et est pourvue, sur les deux bords opposés, d'ailettes (18) agencées perpendiculairement.

5. Dispositif de traitement (1) selon l'une des revendications 1 à 4, dans lequel le corps mélangeur (9) comprend au moins une seconde paroi déflectrice (19), qui raccorde la première paroi de base (10) à la seconde paroi de base (11), est orientée transversalement par rapport à la première paroi déflectrice (13), est agencée à côté de la première paroi déflectrice (13) à une distance autre qu'une distance nulle de la première paroi déflectrice (13), et est raccordée à la seconde paroi de base (11) près du trou principal (12).

6. Dispositif de traitement (1) selon la revendication 5, dans lequel la seconde paroi déflectrice (19) présente une forme cylindrique coaxiale à la conduite tubulaire (2).

7. Dispositif de traitement (1) selon la revendication 5 ou 6, dans lequel la seconde paroi déflectrice (19) se termine dans la zone d'un plan médian de la conduite tubulaire (2).

8. Dispositif de traitement (1) selon la revendication 5, 6 ou 7, dans lequel le corps mélangeur (9) comprend deux secondes parois déflectrices (19), qui sont agencées symétriquement autour d'un axe longitudinal (3) de la conduite tubulaire (2) et à une distance autre qu'une distance nulle l'une de l'autre.

9. Dispositif de traitement (1) selon la revendication 8, dans lequel l'ouverture d'injection (7) est agencée sur un côté opposé par rapport à la première paroi déflectrice (13) de façon à être au point le plus éloigné par rapport à la première paroi déflectrice (13) et au centre par rapport aux deux secondes parois déflectrices (19).

10. Dispositif de traitement (1) selon l'une des revendications 1 à 9, dans lequel la seconde paroi de base (11) comporte une pluralité de trous secondaires (22), qui sont des trous traversants de façon à permettre le passage des gaz d'échappement, présentent un diamètre plus petit que le trou principal (12) et sont agencés autour du trou principal (12).

11. Dispositif de traitement (1) selon la revendication 10, dans lequel les trous secondaires (22) sont répartis le long d'une circonférence, qui est coaxiale au trou principal (12), et entourent le trou principal (12).

12. Dispositif de traitement (1) selon la revendication 10 ou 11, dans lequel les trous secondaires (22) sont répartis le long de deux circonférences, qui sont agencées à l'intérieur l'une de l'autre, sont coaxiaux au trou principal (12) et entourent le trou principal (12).

13. Dispositif de traitement (1) selon la revendication 10, 11 ou 12, dans lequel les trous secondaires (22) sont agencés à proximité de la paroi de côté tubulaire (4) de façon à être plus près de la paroi de côté tubulaire (4) et plus éloignés du trou principal (12).

14. Dispositif de traitement (1) selon l'une des revendications 1 à 13, dans lequel l'ouverture d'injection (7) est agencée sur un côté opposé par rapport à la première paroi déflectrice (13) de façon à être dans le point le plus éloigné par rapport à la première paroi déflectrice (13).

15. Dispositif de traitement (1) selon l'une des revendications 1 à 14, dans lequel la seconde paroi de base (11) comporte un secteur en creux (23), qui est décalé axialement vers la première paroi de base (10) par rapport au reste de la seconde paroi de base (11).
